# EUROPEAN PATENT SPECIFICATION

(11) **EP 3 874 185 B1**
(45) Date of publication and mention of the grant of the patent: **08.10.2025**
(21) Application number: 19816840.3
(22) Date of filing: 31.10.2019
(51) Int. Cl.: F16J 15/3296, F16J 15/46, E21B 19/00

(54) **APPARATUS AND METHOD FOR MONITORING SEALING DEVICES**
VORRICHTUNG UND VERFAHREN ZUR ÜBERWACHUNG VON DICHTUNGSVORRICHTUNGEN
APPAREIL ET PROCÉDÉ POUR SURVEILLER DES DISPOSITIFS D'ÉTANCHÉITÉ

(30) Priority: 02.11.2018 GB 201817992
(43) Date of publication of application: 08.09.2021
(73) Proprietor: Archer Oiltools AS, 4068 Stavanger (NO)
(72) Inventor: MCKENZIE, Martin, Aberdeenshire AB41 6AP (GB); MATHIESON, Ross, Aberdeen Aberdeenshire AB41 6AP (GB); MACKENZIE, Malcolm, Aberdeenshire Aberdeenshire AB41 6AP (GB)
(74) Representative: Bryn Aarflot AS
(86) International application number: PCT/GB2019/053110
(87) International publication number: WO 2020/089653

(56) References cited:
- WO-A2-2009/156264
- US-A- 6 111 643
- US-A1- 2017 107 782

## Description

The present invention relates to an apparatus and method for monitoring sealing devices. The invention has particular application to annular sealing devices that are energised by a fluid (a liquid or a gas), and an aspect of the invention relates to an apparatus, system or method of monitoring and/or controlling a packer or packer system in an oilfield or offshore environment. In an aspect of the invention, the apparatus, system and method may be used to control a sealing device or a sealing system. One particular aspect of the invention relates to an apparatus or method for monitoring wear of one or more packers in a packer assembly (such as a slip joint packer assembly), and/or controlling one or more packers in the packer assembly.

### Background to the invention

Annular sealing devices or packers are used extensively in industry for various applications in which it is required to create a seal between two components, including for example the oil and gas, process, food and mechanical industries all make use of packers. Packer devices employ elements which change in diameter for the purpose of creating a seal between components. Many types of packer comprise elastomeric or rubber elements that are energised to create a seal by a pressurised fluid. For example, an inflatable packer operates by pumping a fluid into an elastomeric seal element to inflate the packer. Packers may be subject to wear, resulting in a reduction or loss of volume or thickness of the seal element over time, particularly when used between moving or reciprocating components.

An example of a packer system subject to wear is one used in a telescopic slip joint packer system for a marine riser in an offshore drilling operation. A slip joint is an expansion and contraction tool that accepts the movement associated with ocean heave and temperature or pressure changes without allowing the movement to affect the marine riser pipe on the seafloor. Containment of the drilling fluids and contaminated mud between the riser and the slip joint is achieved by using packer devices which form part of the slip joint apparatus. Currently, typical riser slip joint systems have at least a primary upper packer which is energised to seal the overlapping connection between the riser and the slip joint, and a secondary lower packer which is energised in the event of a failure of the primary upper packer to maintain the seal. Additional packers may also be provided, resulting in a riser slip joint system having three or four packers, for example. An activated packer is subject to wear from the reciprocating axial motion between the slip joint and the marine riser, and has a limited lifespan.

It is known to respond to failure of a primary packer by energising secondary or further packers. For example, WO 2009/086323 discloses a pressure circuit for a riser slip joint system that responds to failure of the upper packer due to hose failure, leakage of drilling fluids or rig air pressure loss. The pressure circuit uses a differential pressure valve which switches to de-energise the upper packer and energise a lower packer.

The applicant's own international patent publication number WO 2015/150800 describes a system for monitoring and controlling packer activation in a riser slip joint that is configured to control the actuation of the first and second electronically actuated valves independently.

The systems referred to above react to a detected failure of a packer, but do not provide a means of predicting when that failure might take place or facilitate avoiding that failure.

WO2009/156264 describes a gear pump having a sealing means arranged around a drive shaft which can be filled with a pressure medium.

### Summary of the invention

The inventors have recognised that it would be desirable to improve the information available to an operator of a sealing device, to enable planning of operations and/or scheduling and maintenance.

It is amongst the aims and objects of the invention to monitor one or more characteristics of a packer or other sealing device during operation, from which the life span or operating life can be forecast and/or identified and observed. This may enable failure of the sealing device to be avoided, and/or facilitate effective maintenance, servicing, or replacement of the seal.

It is amongst the aims and objects of the invention to provide an apparatus, system and method of monitoring a sealing device that facilitates effective maintenance, servicing, or replacement of the seal prior to its failure.

It is amongst the aims and objects of the invention to provide an apparatus, system and method of monitoring wear of a sealing device.

It is amongst the aims and objects of the invention to provide an apparatus, system and method of associating sealing device operational data with wear of the sealing device.

Other aims and objects of the invention will become apparent from the following description.

According to a first aspect of the invention, there is provided an apparatus for monitoring a condition of a sealing device in accordance with claim 1. The apparatus comprises:
an inlet configured to receive pressurised fluid from a seal activation fluid pressure source;
an outlet configured to be connected to a sealing device to deliver pressurised fluid to a seal element of the sealing device to energise the sealing device in use;
a fluid barrier disposed between the inlet and the outlet and operable to isolate the inlet from the outlet, wherein a fluid chamber is defined between the fluid barrier and the outlet;
means for detecting a change in condition in the fluid chamber indicative of a change in volume of the seal element of the sealing device; and
wherein the apparatus is configured to recharge the fluid chamber when the fluid chamber reaches a depleted condition.

According to a second aspect, not part of the invention, there is provided a sealing device monitoring system comprising:
a sealing device comprising a seal element, the sealing device operable to be energised by a pressurised fluid from a seal activation pressure source; and
an apparatus according to the first aspect of the invention for monitoring a condition of the sealing device;
wherein the apparatus comprises:
   an inlet for pressurised fluid coupled to the seal activation fluid pressure source;
   an outlet coupled to the sealing device to deliver pressurised fluid to the seal element to energise the sealing device;
   a fluid barrier disposed between the inlet and the outlet and operable to isolate the inlet from the outlet, wherein a fluid chamber is defined between the fluid barrier and the outlet; means for detecting a change in condition in the fluid chamber indicative of a change in volume of the seal element; and
   wherein the apparatus is configured to recharge the fluid chamber when the fluid chamber reaches a depleted condition.

The seal activation pressure source may be fluidly connected to the fluid chamber via the inlet. The fluid chamber may be configured to be filled with pressurised fluid from the seal activation pressure source.

The first and second aspects of the invention may therefore detect a change in the fluid chamber that enables a change in volume of the seal element, and thus an indication of wear of the seal element, to be estimated or determined.

The pressurised fluid may be a liquid, or may be a gas.

In a preferred embodiment, the detected change in the fluid chamber is a change in volume of the fluid chamber. The fluid chamber may be operable to change in volume in response to a change in volume of the seal element. The change in volume of the fluid chamber may be measured, and a change in volume of the seal element may be determined from the measured change in volume of the fluid chamber. Thus, a reduction in volume of the seal element, due to wear, is determined from a measured reduction in volume of the fluid chamber. Preferably, a measured change in volume of the fluid chamber is equal to a change in volume of the seal element.

Alternatively, the detected change in condition of the fluid chamber may be a change in pressure in the fluid chamber. The apparatus may comprise a pressure transducer, and a measured pressure change in the fluid chamber may be used to determine a change in volume of the seal element, and thus may provide an indication of wear.

The apparatus may comprise one or more pressure sensors for measuring pressure in the fluid chamber and/or the seal element. Optionally, the apparatus may comprise one or more temperature sensor for measuring temperature in the fluid chamber and/or the seal element.

According to the invention, the fluid chamber comprises a piston chamber, and the fluid barrier is a piston element. The piston element forms a seal with an inner wall of the piston chamber.

The piston chamber may have a circular inner cross section, and the piston element may have a circular outer profile. The piston chamber may be cylindrical.

The piston element is movable in the piston chamber in response to a change in condition in the fluid chamber.

The piston element may have a first piston face exposed to pressurised fluid from the seal activation pressure source. The piston element may have a second piston face exposed to pressurised fluid in the fluid chamber.

The first piston face may have a piston area which is smaller than the piston area of the second piston face. The piston area of the first piston face may be, for example, approximately half the size of the piston area of the second piston face.

When the fluid chamber is filled with pressurised fluid from the seal activation pressure source there may be a net force acting on the piston element which moves the piston element to increase the volume in the fluid chamber to the maximum, and/or a predetermined maximum value.

Alternatively, or in addition, the piston element may be driven to move within the fluid chamber.

In use, wear of the seal element, resulting in a loss of volume of the seal element, would have a tendency to increase the volume of the fluid in the seal element and reduce the pressure in the fluid chamber. However, the seal activation pressure source acts on the first piston face such that when the pressure in the fluid chamber reduces to below a predetermined threshold to compensate for the increase in volume required by the seal element, there is a net force acting on the piston element which moves the piston element to reduce the volume in the fluid chamber, displacing fluid from the chamber into and/or towards the seal element. If there is no wear of the seal element, the piston element is brought into and in a force balanced condition. The reduction in volume in the fluid chamber can be measured and used to determine the loss of volume of the seal element due to wear. The pressure in the fluid chamber may also be maintained at an adequate pressure such that the sealing device remains fully energised.

When the volume and/or the pressure in the fluid chamber has been entirely depleted and/or reduced the chamber may be recharged or refilled by the seal activation fluid pressure source, and the process may be repeated. When the volume and/or pressure in the fluid chamber has been entirely depleted, and/or reduced to a predetermined minimum value, the chamber may be refilled by the seal activation fluid pressure source, and the process may be repeated.

The change in volume of the fluid chamber may be measured over several repeated processes, and a total change in volume of the seal element may be determined from cumulative monitoring over the repeated processes.

Alternatively, or in addition, the fluid chamber may be capable storing a volume of pressurised fluid which is substantially equal to or greater than the volume required to fill the seal element entirely. In this instance, the volume of pressurised fluid which is available to be delivered from the apparatus fluid chamber to the seal element (as it experiences loss of volume) may be of sufficient quantity such that the process does not need to be repeated. Therefore, the total change in volume of the seal element can be measured over one process only and the fluid chamber does not require refilling.

The apparatus may comprise a sensor for measuring a parameter associated with the volume of the fluid chamber. Preferably the sensor is a linear transducer. The linear transducer may measure the position, or the movement in position, of the piston element in the piston chamber. Thus a reduction in volume can be calculated from the position, or the movement in position, and the piston chamber cross sectional area. A reduction in volume of the seal element may be proportional to a linear movement of the piston element.

The linear transducer may detect when the piston element reaches a position in which the volume in the fluid chamber is entirely depleted, and/or reduced to a predetermined minimum value. The linear transducer may therefore trigger the refilling of the chamber for repeating the measurement process.

According to the invention, the apparatus is provided with a bypass to the fluid barrier, which is operable to fluidly connect the seal activation pressure source to the fluid chamber via the inlet.

The bypass preferably comprises a bypass valve, which is preferably an isolation valve. The valve may be an electronically actuated solenoid valve, or another remotely actuated valve.

The bypass may be a first bypass to the fluid barrier, and the apparatus may be provided with a second bypass to the fluid barrier. The second bypass may be operable to fluidly connect the seal activation pressure source to the fluid chamber. The second bypass may be operable to fluidly connect the seal activation pressure source to the fluid chamber via the inlet. The second bypass preferably comprises a bypass valve, which is preferably an isolation valve. The bypass valve may be an electronically actuated solenoid valve, or another remotely actuated valve.

The first and/or bypass valves may be operable to deliver fluid from the seal activation fluid pressure source to the fluid chamber.

The apparatus may further comprise an inlet pressure transducer, which may be located between the inlet and the fluid chamber to monitor the pressure of the pressurised fluid which enters the apparatus via the inlet. Alternatively, or in addition, the apparatus may comprise an outlet pressure transducer, which may be located between the fluid chamber and the outlet to measure the pressure of the pressurised fluid delivered to the seal element. The apparatus may be provided with further pressure transducers. For example, a further pressure transducer may be provided to monitor the pressure in the fluid chamber.

The apparatus may further comprise a pressure regulator, which may be located between the fluid chamber and the outlet. The pressure regulator may be operable to regulate the pressure of the pressurised fluid at the outlet of the apparatus, and therefore to regulate the pressure of the pressurised fluid delivered to the seal element via the outlet. The pressure regulator may prevent pressurised fluid at a higher pressure than the operating range of the seal element from being delivered to the seal element, therefore protecting the seal element from overpressure and the potential damage and/or failure associated with this condition.

The system may further comprise a control module which may be operable to perform at least one of: receiving data and monitoring readings from transducers and/or sensors included in the apparatus; controlling the operation of valves included in the apparatus; performing calculations which may be based on readings obtained from the transducers and/or sensors (for example, calculating a reduction in volume of the fluid chamber and/or the seal element); communicating with an external processing device which may be a computer; and record time series data.

Embodiments of the second aspect of the invention may include one or more features of the first aspect of the invention or its embodiments, or vice versa.

According to a third aspect of the invention there is provided a method of monitoring a sealing device in accordance with claim 7. The method comprises providing an apparatus as in the first aspect of the invention, comprising the inlet connected to a seal activation pressurised fluid source, and the outlet connected to the sealing device;
delivering pressurised fluid to a seal element of the sealing device to energise the sealing device;
isolating the sealing device from the seal activation pressurised fluid source by a fluid barrier disposed between the inlet and the outlet of the apparatus;
detecting a change in condition in a fluid chamber between the fluid barrier and the outlet, the change in condition indicative of a change in volume of the seal element of the sealing device; and
wherein the apparatus is configured to recharge the fluid chamber when the fluid chamber reaches a depleted condition.

The seal activation pressure source may be fluidly connected to the fluid chamber via the inlet and the method may comprise exposing the fluid chamber to the pressurised fluid from the seal activation pressurised fluid source to put the apparatus in a charged condition. The method may comprise filling the fluid chamber with a volume and/or pressure of pressurised fluid from the seal activation pressurised fluid source to a maximum and/or a predetermined maximum value.

The method may comprise isolating the sealing device from the seal activation pressurised fluid source after the fluid chamber has been charged. The method may comprise isolating the sealing device from the seal activation pressurised fluid source after the fluid chamber is filled.

The method may comprise detecting a change in condition in the fluid chamber until the fluid chamber reaches a depleted condition. The method may comprise detecting a change in condition in the fluid chamber until the volume and/or pressure of pressurised fluid in the fluid chamber has been entirely depleted, and/or reduced to a predetermined minimum value.

When the volume and/or the pressure in the fluid chamber has been entirely depleted and/or reduced the chamber may be recharged or refilled by the seal activation fluid pressure source, and the process may be repeated.

The method may comprise comprising recharging the fluid chamber by exposing the fluid chamber to a pressurised fluid from the seal activation pressurised fluid source to put the apparatus in a recharged condition. The method may comprise temporarily removing the isolation between the sealing device and the seal activation pressurised fluid source and refilling the fluid chamber with a volume and/or pressure of pressurised fluid from the seal activation pressurised fluid source to a maximum and/or a predetermined maximum value.

The method may comprise isolating the sealing device from the seal activation pressurised fluid source after the fluid chamber is recharged. The method may comprise isolating the sealing device from the seal activation pressurised fluid source after the fluid chamber is recharged and/or refilled.

The method may comprise repeating the steps of detecting a change in condition in the fluid chamber until the fluid chamber reaches a depleted condition and recharging the fluid chamber. The method may comprise repeating the process of detecting a change in condition in the fluid chamber, which may be until the volume and/or pressure of pressurised fluid in the fluid chamber has been entirely depleted, and/or reduced to a predetermined minimum value.

The method may comprise repeating the process of recharging and/or refilling the fluid chamber and/or detecting a change in condition in the fluid chamber several times.

The method may comprise detecting and measuring the change in condition of the fluid chamber over several repeated processes and determining a total change in volume of the seal element from cumulative monitoring over the repeated processes.

Embodiments of the third aspect of the invention may include one or more features of the first or second aspects of the invention or their embodiments, or vice versa.

According to a fourth aspect of the invention there is provided a method of determining an operational life of a sealing device, the method comprising:
monitoring a sealing device according to the method of the third aspect of the invention;
measuring one or more reference parameters while monitoring the sealing device;
calculating a rate of change in volume of the seal element with respect to the one or more reference parameters;
calculating from the rate of change a value of the one or more reference parameters at which a lower threshold volume of seal element is passed.

Preferably, the one or more reference parameters comprises time. Alternatively, or in addition, the one or more reference parameters comprises pressure, heave, or relative travel between the seal element of the sealing device and a surface on which the seal element makes a seal. Alternatively, or in addition, the one or more reference parameters comprises temperature.

Embodiments of the fourth aspect of the invention may include one or more features of the first to third aspects of the invention or their embodiments, or vice versa.

According to a fifth aspect of the invention there is provided a method of analysing seal wear characteristics, the method comprising:
(a) monitoring a sealing device according to the method of the third aspect of the invention;
(b) measuring first and second reference parameters while monitoring the sealing device;
(c) calculating a rate of change in volume of the seal element with respect to the first reference parameter;
(d) calculating an average value of the second reference parameter; and
(e) associating the calculated rate of change in volume with the calculation of the average value of the second reference parameter and recording the association in a database.

The method may comprise repeating steps (a) to (e) for a further sealing device.

The method may comprise determining a correlation between a rate of change in volume of the seal element and the second reference parameter.

The method may comprise producing a plot of the correlated data.

The method may comprise calculating from the correlation, for a given value of the second reference parameter, a value of the first reference parameter at which a lower threshold volume of seal element is passed.

Embodiments of the fifth aspect may include one or more features of the first to fourth aspects of the invention or their embodiments, or vice versa.

### Brief description of the drawings

There will now be described, by way of example only, various embodiments of the invention with reference to the drawings, of which:
Figures 1A and 1B are schematic representations of a sealing device monitoring system in accordance with a first embodiment, not part of the invention, with an unworn sealing device and a worn sealing device respectively;
Figure 2 is a schematic representation of a sealing device monitoring apparatus in accordance with a second embodiment, part of the invention;
Figure 3 is a schematic representation of a sealing device monitoring apparatus in accordance with an alternative embodiment of the invention;
Figures 4A and 4B are schematic representations of a sealing device monitoring system incorporating the apparatus of Figure 3, with an unworn sealing device and a worn sealing device respectively; and
Figure 5 is a schematic representation of the sealing device monitoring apparatus of Figure 3 in conjunction with a packer monitoring and control system.

### Detailed description of preferred embodiments

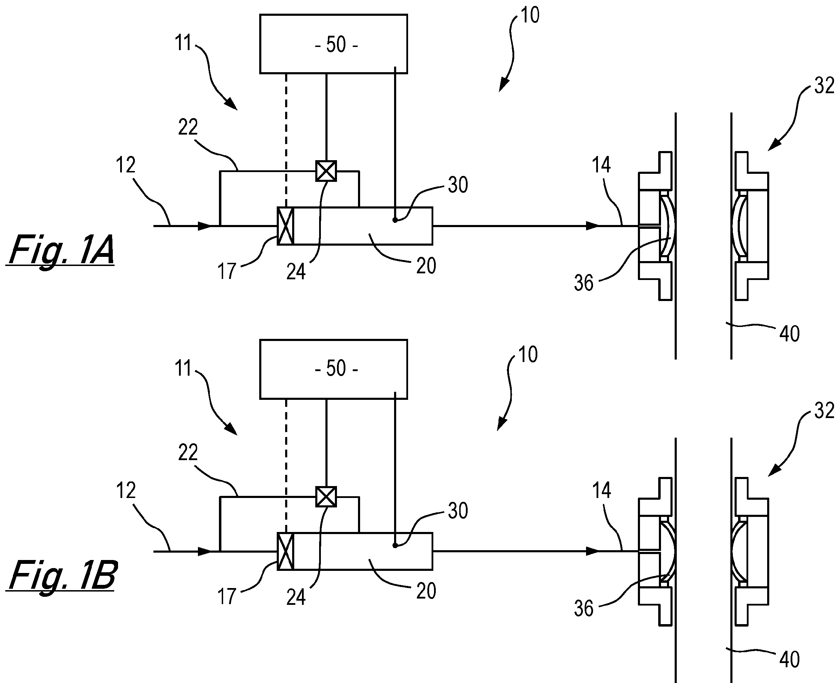

Figures 1A and 1B are schematic representations of a sealing device monitoring system in accordance with a first embodiment. The system is shown and described in the context of a packer for a telescopic slip joint for a marine drilling riser, but it is applicable to other sealing device systems across a range of industrial applications. These include systems in the pipeline, food processing and pharmaceutical industries.

Referring to Figure 1A, the system 10 comprises a monitoring apparatus 10 and a sealing device in the form of a slip joint packer 32. The apparatus 11 comprises an inlet 12 connected to a seal activation fluid pressure source (not shown), which may be a hydraulic or pneumatic pressure source provided at the site (in this case the drilling rig), and an outlet 14 through which a pressurised fluid is delivered to the packer for actuation of the packer. In this case the packer is energised by inflation of the sealing element 36. Supply of the pressurised fluid is generally indicated by the arrows.

Located between the inlet 12 and the outlet 14 of the system 10 is a fluid barrier 17, which in this case is an electronically actuated solenoid valve. A fluid chamber 20 is located between the fluid barrier 17 and the outlet 14, and is isolated from the inlet by the fluid barrier 17, when the valve is closed. An optional bypass 22 to the fluid barrier connects the inlet to the fluid chamber 20, and comprises an inline valve 24 to control the function of the bypass. A sensor 30 is provided in the fluid chamber 20, and communicates with a control module 50. In this embodiment, the control module 50 also communicates with the valves 22 and 24 to control their operation.

Figure 1A shows the system 10 with a substantially unworn seal element 36 in the packer 32. The valve 17 is initially opened (with the valve 24 closed) to provide fluid pressure to energise the seal element of the packer. The valve 17 is then closed to lock in fluid pressure in the fluid chamber 20 between the outlet 14 and the valve 17. The fluid pressure in the chamber is sufficient to maintain a seal between the packer 32 and the riser 40.

Figure 1B shows the system 10 after a period of use, with a worn seal element 36 in the packer 32. Wear of the seal element has decreased the volume of the seal element by reducing its wall thickness. This increases the volume of pressurised fluid required to effectively energise the seal element. A sensor 30 is provided in the fluid chamber and monitors conditions in the fluid chamber that are indicative of a change in volume of the seal element of the packer. A signal is provided to the control module 50 from the sensor 30, and the measured data is used to determine a loss in volume and/or wear condition of the seal element 36. This determination may be by calculations performed by the control module itself, or may be by calculations performed by an external processing device such as a computer.

After a period of use, pressurised fluid is introduced into the fluid chamber from the seal activation pressurised fluid source to reinstate desired conditions in the fluid chamber. This may be achieved by opening the valve 17. The bypass 22 can be used to deliver pressurised fluid into the chamber 20 without opening the valve 17, or in the event that the valve 17 is unable to open. Continued monitoring of the conditions within the fluid chamber 20, including accounting for the introduction of pressurised fluid during a reinstatement of desired conditions, enable continued monitoring of the wear condition of the seal element. The wear condition of the seal element can be determined from the cumulative monitoring over several monitoring and reinstatement cycles.

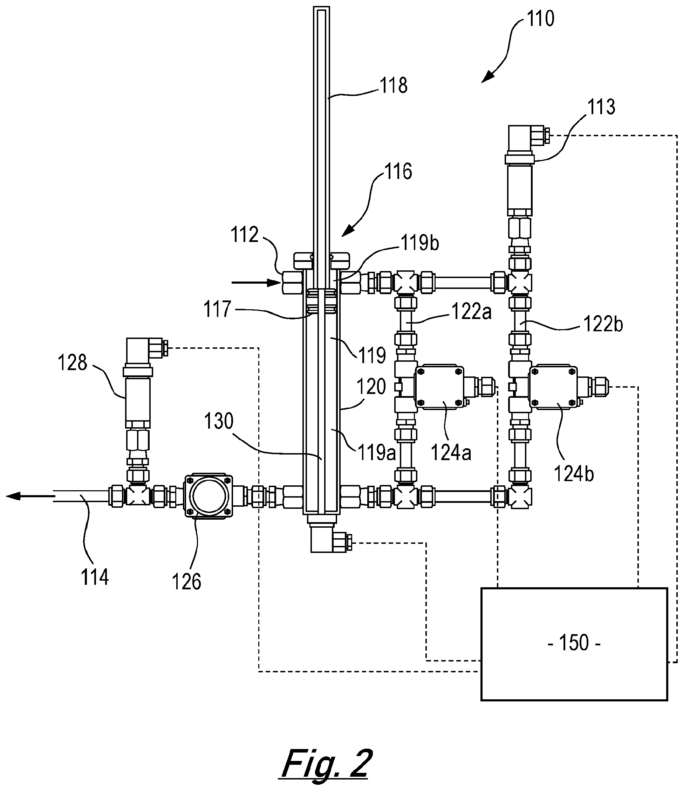

In Figures 1A and 1B the system 10 is illustrated in schematic form, to permit the basis of its operation to be briefly illustrated and described. However, various embodiments of the apparatus and system are possible, and exemplary embodiments of the invention will be described below with reference to Figures 2 to 5.

Referring to Figure 2, there is shown generally at 110 a sealing device monitoring apparatus in accordance with a second embodiment of the invention. The monitoring apparatus 110 is configured to be connected to a sealing device (not shown) in the form of an inflatable slip joint packer, which seals against an outer wall of a marine riser that extends through the packer .

In this example, the packer is energised by inflation of the sealing element by hydraulic fluid. The apparatus 110 comprises an inlet 112 connected to a seal activation fluid pressure source (not shown), which is a hydraulic pressure source provided on a drilling rig, and an outlet 114 through which the pressurised fluid is delivered to the packer for actuation of the packer. Supply of the pressurised fluid is generally indicated by the arrows.

Located between the inlet 112 and the outlet 114 of the system 110 is a ram-type piston cylinder arrangement, shown generally at 116, comprising a piston element 117 on a piston rod 118, and operable to move within a piston chamber 119 defined within a cylinder 120. The piston element 117 provides a fluid seal in the piston chamber to define a lower piston chamber 119a and an upper piston chamber 119b, and can move in an axial direction with respect to the cylinder 120. Figure 2 shows the piston 117 stroked towards an upper condition, with the piston chamber 119 of the cylinder 120 containing a relatively large volume of pressurised fluid below the piston element 117 in lower chamber 119a, compared with the volume in upper chamber 119b.

The piston arrangement 116 is provided with a linear transducer 130 internally within the piston cylinder, which is operable to measure the position of the piston element 117 in the piston cylinder, and therefore enable the volume of the lower piston chamber 119a to be determined by a simple calculation.

The apparatus comprises a pair of bypass lines 122a, 122b, located between the inlet 112 and the outlet 114, and arranged to bypass the piston element 117. Each bypass line is provided with a valve 124a, 124b, which is operable by a control module (not shown) to open and close. The default failsafe position of valves 124a, 124b is open. The two bypass lines 122a, 122b, and valves 124a, 124b, provide redundancy in the event that one of the lines and/or the valves becomes damaged or inoperative. A supply pressure transducer 113 is provided between the inlet 112 and the bypass lines 122a, 122b, to monitor the pressure of the pressurised fluid which enters the apparatus 110. The apparatus 110 also comprises a pressure regulator 126 located between the lower piston chamber 119a and the outlet 114, and an outlet pressure transducer 128 located between the regulator 126 and the packer (not shown) on the outlet side. The regulator 126 regulates pressure at the outlet of the apparatus and thus to the packer, preventing an excess of pressure (i.e. higher than the desired operating range) from being presented to the packer. The outlet pressure transducer 128 is located on the outlet side of the regulator, to measure the pressure supplied to the packer. A further transducer may be provided between the lower piston chamber 119a and the regulator 126 to monitor the pressure in the piston chamber.

The apparatus comprises a control module 150, which is in communication with the pressure transducers 113 and 128, the linear transducer 130, and the bypass valves 124a, 124b. The control module receives data signals from the respective transducers and controls the operation of the valves. Determination of a loss in volume and/or a wear condition of the seal element may be by calculations performed by the control module itself, or may be by calculations performed by an external processing device such as a computer, connected to the control module. In this embodiment, the control module has a human machine interface (HMI) (not shown).

To energise the packer, the pressurised fluid is delivered through the apparatus 110 from the inlet 112 to the outlet 114. With one or both of the bypass valves open, pressurised fluid enters the apparatus via the inlet 112 and through bypass line(s) to fill the apparatus.

The piston areas of the respective piston faces are such that there is an initial net force on the lower (piston chamber) side of the piston element, which raises the piston element in the chamber to an upper position, which increases the volume of the lower piston chamber 119a to a maximum. In this particular embodiment, the piston area of the lower side of the piston element is two times that of the upper side of the upper side. This particular ratio of piston areas has been selected to rapidly move (or return) the piston to its uppermost position when pressure is equalised; however, it will be appreciated that other ratios can be used.

The valves 124a and 124b are then closed to isolate the fluid outlet 114 and the lower piston chamber 119a from the source of pressurised fluid on the inlet side.

A consequence of the ratio of piston areas used is that the supply pressure (the pressure that is supplied to the apparatus) must be higher than the working pressure of the packer so that there is sufficient supply pressure to cause a net force on the piston element to initially raise the piston element at the start of the filling cycle.

After the piston element has been moved to its uppermost position, it is initially unable to move downward within the cylinder in the event of packer wear due to the excess pressure contained within the apparatus. Therefore, some of the initial pressurised fluid must be bled from the system to reduce the system pressure to a manageable working pressure. After bleeding of the system, the piston will be able to move as intended. The pressure removed from the system during this process can be treated as negligible, and/or dismissed from consequent calculations performed by the system. Alternatively, the calculations and/or recorded data might be adjusted to compensate for the pressurised fluid which is bled from the system at the start of the measurement.

The control module 150, via the respective transducers, monitors the condition of the system.

In operation, the sealing device experiences wear and the material of the sealing element reduces in thickness and volume. The reduction in volume of the seal element is compensated for by increased inflation of the seal element; in other words, the volume of fluid on the interior of the seal element increases to maintain the sealing element in sealing contact with the riser surface. The outlet of the apparatus 114 is isolated from the fluid supply from inlet 112, but the required volume of fluid is provided from the piston chamber, with a corresponding downward movement of the piston element 117 to decrease the volume of the fluid in the lower chamber 119a. The required fluid pressure for energising the sealing element is maintained throughout by the regulator 126. The linear transducer 130 measures the change in position of the piston element 117 over time, and by a simple calculation, the reduction in volume of the sealing element can be determined in the control module. The control module can record a time series of the seal element determined volume, to enable calculation of a seal wear rate.

When the linear transducer 130 detects that the piston element has reached a lower position in the cylinder (e.g. a set point before the chamber 120 is completely empty), the apparatus and lower piston chamber can be refilled by opening of a bypass valve 124a and/or 124b. The valves 124a and/or 124b are actuated to open by the control module 150. This moves the piston element 117 back to an upper position as described above. The bypass valve(s) is subsequently closed when the piston element reaches a set point upper position in the cylinder, fluid is once again bled to reduce pressure in the apparatus (if required) and the apparatus continues to monitor conditions in the fluid chamber; as the sealing device is used, a loss in volume is determined from movement of the piston element. This process can be repeated so that over an extended period of time, over a number of piston movement and refill cycles, the total volume reduction in the packer material can be determined.

As described above, the apparatus of the invention enables a wear rate to be calculated from the change in volume over time. Typically the sealing device manufacturer will specify a maximum volume reduction that is acceptable for reliable operation of the sealing device, and using the calculated wear rate, a prediction can be made of a remaining available operating time of the sealing device. This prediction can be used to plan drilling operations and/or schedule servicing and/or replacement of the sealing device. Alternatively, the system can be used to set a maximum volume reduction that is acceptable to the system operator, and using the calculated wear rate, a prediction can be made of a remaining available operating time of the sealing device to the set volume reduction.

There may be a number of periods during operation of the system in which data relating to the wear/volume loss of the seal element is not collected or is intentionally discarded from measurements and/or calculations. For example, during the refilling of the system or during the bleeding of the system. Losses which are experienced during these times are expected to be negligible and, in any case, these losses will be repeated during every refill cycle and may cancel one another out and/or may be predicted by the system in order to compensate for their occurrence. Measurements may also be adjusted to compensate for the real or expected losses.

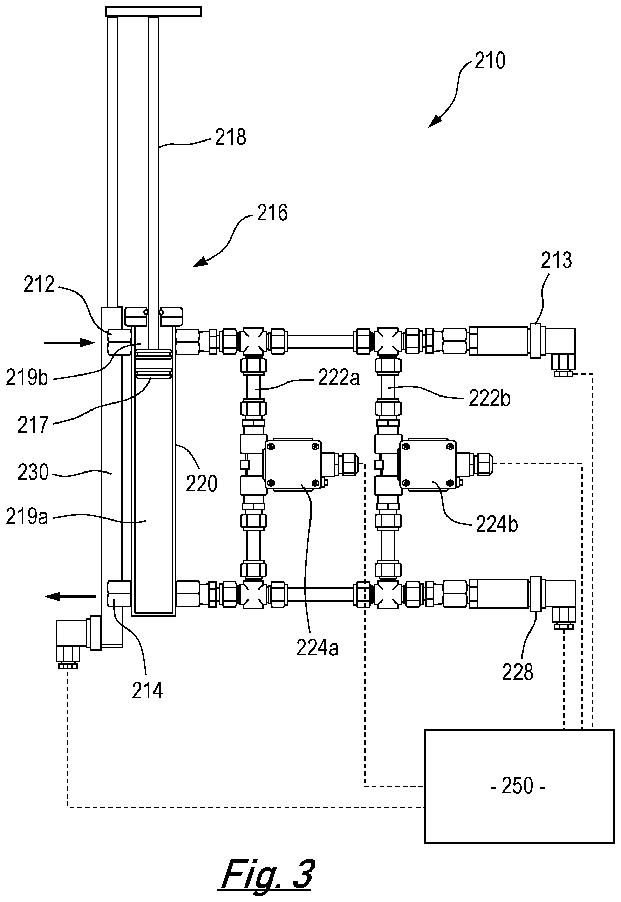

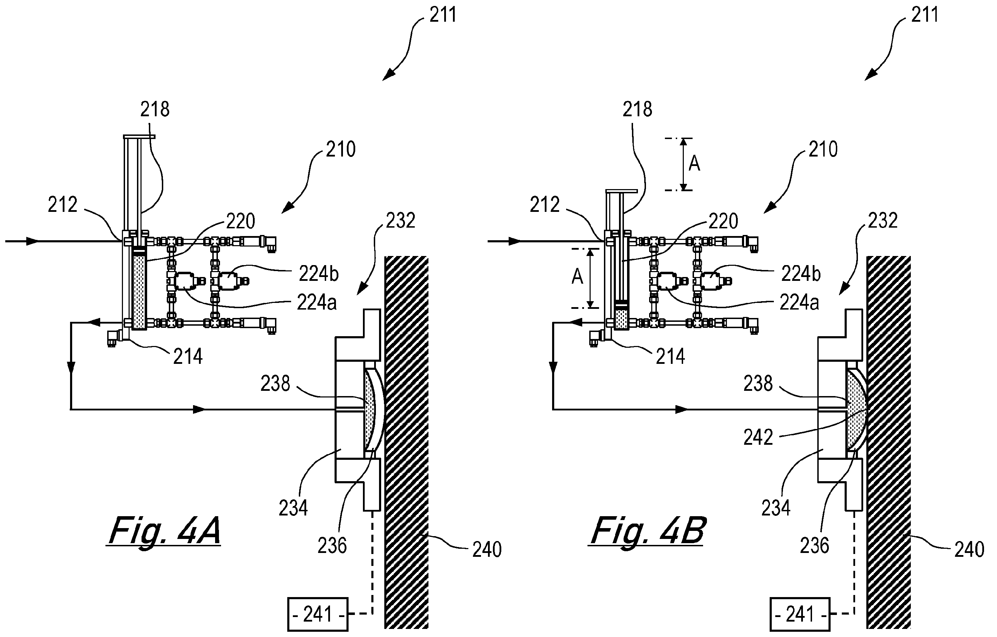

Referring to Figures 3, 4A, and 4B, there is shown generally at 211 a sealing device monitoring system in accordance with an alternative embodiment of the invention. The system 211 comprises a monitoring apparatus 210 and a sealing device in the form of an inflatable slip joint packer 232, which seals against an outer wall of a marine riser 240 that extends through the packer. The apparatus 210 is similar to the apparatus 110, and will be understood from Figure 2 and the accompanying description. Like features are given like reference numerals, incremented by 100 in Figures 3, 4A, and 4B, and are not described in detail for reasons of brevity. The apparatus 210 differs from the apparatus 110 in that the linear transducer 230 is external to the piston cylinder, in contrast with the internal linear transducer configuration shown in Figure 2. The linear transducer 230 is provided on an external rod. Technically, both internal and external linear transducers function in exactly the same way. The apparatus 210 also differs in that it does not comprise a pressure regulator located between the lower piston chamber 219a and the outlet 214; however it will be appreciated that a regulator can be provided in the same manner as in Figure 2. In addition, the outlet pressure transducer 228 is provided between the outlet 214 and the bypass lines 222a, 222b, to monitor the pressure in the piston chamber on the outlet side of the apparatus 210.

The system may also be provided with a sealing device sensor module 241, which is located at or near the sealing device and collects data relating to its operating conditions. The sensor module 241 monitors heave data or movement data for the slip joint, and optionally monitors the temperature of the sealing device and/or the ambient temperature at or near the sealing device. The data collected by the sensor module 241 may be correlated with the determined wear condition of the sealing device, and may facilitate predictive monitoring as will be described in more detail below.

The monitoring of the reduction in volume of the seal element can be correlated with data collected by the sensor module 241 to lead to improved operational planning as follows. The sensor module 241 comprises a linear transducer that is configured to measure the heave of the offshore installation, and thus the amount of relative axial movement between the packer element and the riser. This means that the wear rate, calculated as a function of time, can be associated with an average heave, or heave expressed as a total distance travelled, experience by the system. Data relating to the wear rate of the packer can be associated with the heave data, and by collecting data from a number of systems and/or a single system under a range of conditions, a picture can be built up of how the heave experienced by the system affects the wear rate. This information can be used to predict the operating lifespan of a sealing device for a given heave condition; this information can be used by the manufacturer or operator of a particular packer assembly to plan its drilling operations and/or maintenance schedule, regardless of whether that particular packer assembly is to be provided with the monitoring apparatus itself.

Alternatively, or in addition to the above-described correlation of heave data to wear rate, the apparatus can be used to calculate a wear rate of a sealing device as a function of heave, or of distance travelled by the seal with respect to the riser, rather than as a function of time. A time-based prediction may not be reliable, if there is a change in sea state, and a heave-based prediction may provide a more reliable indication of the operating lifetime of the seal element. By calculating the wear of the sealing element per metre of stroke between the sealing device and the riser, a prediction can be made of a remaining total stroke of the sealing device that can be experienced before the set volume reduction is reached. The actual heave can continuously be measured n expected sea state condition can be used to predict the remaining operating time available, or the actual heave can continuously be measured to update the prediction.

Although the apparatus is primarily concerned with measuring, recording and calculating changes in volume and/or pressure over time, it will be appreciated that additional parameters relating to the operating conditions of the sealing device may be measured and/or related to the wear condition in embodiments of the invention. For example, drilling mud parameters, such as fluid type, density, cuttings type and/or temperature may be detected by the sensor module 241 and related to the determined wear condition of the sealing device, which may facilitate predictive monitoring.

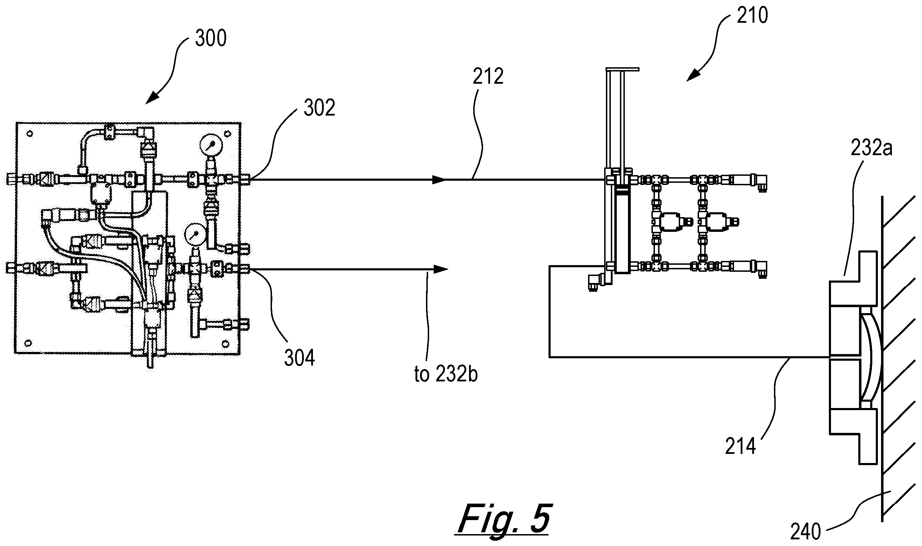

Figure 5 shows the system 211 used in conjunction with a system, generally shown at 300, for monitoring and controlling packer activation in a riser slip joint. The system 300 is as described in the applicant's international patent publication number WO 2015/150800, the contents of which are incorporated by reference. The system 300 is connected to two packers in a slip joint packer assembly; a primary upper packer 232a and a secondary lower packer 232b (not shown). However, it will be appreciated that additional packers may be provided. For example, the system may be a three or a four packer system.

The system 300 monitors the pressure of the primary packer supply, and is capable of activating the secondary packer, for example if the primary packer is determined as having failed or is required to be deactivated. The system is also capable of activating both packers simultaneously, for example in the event of a rig divert mode being activated.

In the configuration of Figure 5, the apparatus 210 is disposed between the system 300 and the primary upper packer 232a, with the inlet 212 of the apparatus connected to an outlet 302 of the system. The system 300 is also connected to the secondary lower packer 232b via outlet 204. As described above, a typical function of the system 300 is to activate the lower packer 232b when a failure of the upper packer is detected. However, used in conjunction with the apparatus 210, the system 300 can be configured to activate the lower packer when a maximum wear condition of the upper packer, as determined by the apparatus 210, is reached.

Although the configuration of Figure 5 shows an apparatus 210 connected to the upper packer 232a, it will be appreciated that an apparatus may alternatively or additionally be connected to the lower packer, so that wear of the lower packer can be determined.

It will be appreciated that the apparatus 110 of Figure 1 functions in substantially the same way as the apparatus 210, and can also be used in conjunction with a sensor module (not shown) and the packer monitoring and control system 300 as described herein.

Functional fail safes may be incorporated into the system, including those listed below.

The control module and/or an external processor may be programmed with a maximum wear rate of the sealing element, which is consistent with the extremes of seal element wear during use. If the apparatus determines that this seal wear rate is exceeded (i.e. a reduction in the volume of fluid exceeds that of the maximum wear rate), this is indicative of a fluid leak in the packer. An operator of the system can be alerted, and/or if the system is used in conjunction with a packer monitoring and control system (such as 300 described in Figure 5), a secondary packer could be activated.

The control module and/or an external processor may be programmed with a maximum time required for refilling the piston cylinder. The time taken to refill the piston can be measured, and if the time is exceeded, this is indicative of a fluid leak in the packer. An operator of the system can be alerted, and/or if the system is used in conjunction with a packer monitoring and control system (such as 300 described in Figure 5), a secondary packer could be activated.

The status of the transducers and/or valves can be monitored by the control module to ensure that they are functioning properly.

In the embodiments described above, the apparatus depends on a ratio of respective piston areas to move the piston to its initial position within the chamber. However, it will be appreciated that such movement of the piston may be controlled in additional and/or alternative ways. For example, the piston may be driven back to its uppermost position after reaching a lower position in the chamber. To achieve this, a hydraulic supply could be provided at the base of the cylinder and used to drive the piston back to its starting position.

Alternatively, a cylinder could be provided which has a capacity for holding a volume of pressurised fluid greater than the volume of the seal element (or which may be sufficient to fill the seal element a number of times over), such that only one cycle of piston movement is required, at a maximum. Hence, no refill cycle will be required in this configuration and the piston will not be required to return to the uppermost position after use. In addition, bleeding of the system will not be required. Preferably, a cylinder of this type would be made longer (as opposed to wider) to accommodate the additional volume capacity in order to retain linear resolution in measurements.

The apparatus and systems described above provides an apparatus, system and method of monitoring a sealing device. It facilitates effective maintenance, servicing, or replacement of the seal prior to its failure. The invention is described in the context of telescopic slip joint packers used in the offshore drilling industry, but has general application to a range of sealing systems in a range of industries. These include, but are not limited to, oilfield applications to stuffing boxes, "nodding donkey" well pumps, and overshot tools.

Variations to the above-described embodiments are within the scope of the invention as defined herein. For example, although the embodiments of Figures 2 to 5 rely on the principle of measuring a change in volume while maintaining a fluid pressure, the invention is not limited to this principle. For example, in an alternative configuration, the fluid chamber has a fixed volume, and a loss in volume of the packer element is measured as a reduction in pressure in the chamber. Optionally in conjunction with other parameters such as temperature, the change in pressure can be used to determine a reduction in volume due to a wear condition, and the chamber can be refilled to allow continued monitoring over a number of pressure reduction and refill cycles. Pressure reductions due to wear can be distinguished from those due to a leak by virtue of their rate, and the time taken to refill the chamber. Ultimately, the scope of the invention is determined by the appended claims.

## Claims

1. An apparatus (11, 110, 210) for monitoring a condition of a sealing device (32, 232), the apparatus comprising:
an inlet (12, 112, 212) configured to receive pressurised fluid from a seal activation fluid pressure source;
an outlet (14, 114, 214) configured to be connected to a sealing device to deliver pressurised fluid to a seal element (36, 236) of the sealing device to energise the sealing device in use;
a fluid barrier (117, 217) disposed between the inlet and the outlet and operable to isolate the inlet from the outlet, wherein a fluid chamber (20, 120, 220) is defined between the fluid barrier and the outlet;
means for detecting a change in condition in the fluid chamber indicative of a change in volume of the seal element of the sealing device;
**characterised in that** the fluid chamber (20, 120, 220) comprises a piston chamber (119), and **in that** the fluid barrier (117, 217) is a piston element (117, 217) which forms a seal with an inner wall of the piston chamber and which is movable in the piston chamber in response to a change in condition in the fluid chamber; and
**in that** the apparatus is provided with at least one bypass (22) to the fluid barrier (117, 217), which is operable to fluidly connect the seal activation pressure source to the fluid chamber (20, 120, 220) via the inlet (12, 112, 212).

2. The apparatus (11, 110, 210) according to claim 1, wherein the detected change in condition in the fluid chamber (20, 120, 220) is a change in volume of the fluid chamber in response to a change in volume of the seal element (36, 236), and wherein the change in volume of the fluid chamber is measured, and a change in volume of the seal element is determined from the measured change in volume of the fluid chamber.

3. The apparatus (11, 110, 210) according to claim 1, comprising a linear transducer (130, 230) which is operable to measure the position of the piston element (117, 217) in the piston chamber (119).

4. The apparatus (11, 110, 210) according to any preceding claim, wherein the apparatus is configured to recharge the fluid chamber (119) from the seal activation fluid pressure source, when the fluid chamber reaches a depleted condition.

5. The apparatus (11, 110, 210) according to any preceding claim, further comprising an inlet pressure transducer located between the inlet (12, 112, 212) and the fluid chamber (119) to monitor the pressure of the pressurised fluid which enters the apparatus via the inlet and an outlet pressure transducer located between the fluid chamber and the outlet (14, 114, 214) to measure the pressure of the pressurised fluid delivered to the seal element (36, 236).

6. The apparatus (11, 110, 210) according to any preceding claim, further comprising a pressure regulator located between the fluid chamber and the outlet (14, 114, 214), which is operable to regulate the pressure of the pressurised fluid at the outlet of the apparatus, and therefore to regulate the pressure of the pressurised fluid delivered to the seal element (36, 236) via the outlet.

7. A method of monitoring a sealing device (32, 232), the method comprising:
providing an apparatus (11, 110, 210) according to one of the preceding claims, wherein the inlet (12, 112, 212) is connected to a seal activation pressurized fluid source, and the outlet (14, 114, 214) is connected to the sealing device (32, 232);
delivering pressurised fluid to a seal element of the sealing device to energise the sealing device;
isolating the sealing device from the seal activation pressurised fluid source by a fluid barrier (17, 117, 217) disposed between the inlet and the outlet of the apparatus;
detecting a change in condition in a fluid chamber (119) between the fluid barrier and the outlet, the change in condition indicative of a change in volume of the seal element (36, 236) of the sealing device.

8. The method according to claim 7, comprising exposing the fluid chamber (119) to a pressurised fluid from the seal activation pressurised fluid source to put the apparatus in a charged condition, and isolating the sealing device (32, 232) from the seal activation pressurised fluid source after the fluid chamber has been charged.

9. The method according to claim 7 or claim 8, comprising recharging the fluid chamber (119) by exposing the fluid chamber to a pressurised fluid from the seal activation pressurised fluid source to put the apparatus in a recharged condition.

10. The method according to claim 9, comprising isolating the sealing device (32, 232) from the seal activation pressurised fluid source after the fluid chamber (119) is recharged and repeating the steps of detecting a change in condition in the fluid chamber until the fluid chamber reaches a depleted condition and recharging the fluid chamber.

11. A method of determining an operational life of a sealing device (32, 232), the method comprising:
monitoring a sealing device according to the method of claim 7;
measuring one or more reference parameters while monitoring the sealing device;
calculating a rate of change in volume of the seal element (36, 236) with respect to the one or more reference parameters selected from the group comprising: time, pressure, heave, relative travel between the seal element of the sealing device (32, 232) and a surface on which the seal element makes a seal, and temperature;
calculating from the rate of change a value of the one or more reference parameters at which a lower threshold volume of seal element is passed.

12. A method of analysing seal wear characteristics, the method comprising:
(a) monitoring a sealing device (32, 232) according to the method of claim 7;
(b) measuring first and second reference parameters while monitoring the sealing device;
(c) calculating a rate of change in volume of the seal element with respect to the first reference parameter;
(d) calculating an average value of the second reference parameter; and
(e) associating the calculated rate of change in volume with the calculation of the average value of the second reference parameter and recording the association in a database.

13. The method according to claim 12, comprising repeating steps (a) to (e) for one or more further sealing devices (32, 232), determining a correlation between a rate of change in volume of the seal element and the second reference parameter and calculating from the correlation, for a given value of the second reference parameter, a value of the first reference parameter at which a lower threshold volume of seal element is passed.

## Patentansprüche

1. Einrichtung (11, 110, 210) zum Überwachen eines Zustands einer Dichtungsvorrichtung (32, 232), die Einrichtung umfassend:
einen Einlass (12, 112, 212), der konfiguriert ist, um Druckfluid von einer Dichtungsaktivierungsfluiddruckquelle aufzunehmen;
einen Auslass (14, 114, 214), der konfiguriert ist, um mit einer Dichtungsvorrichtung verbunden zu werden, um Druckfluid an ein Dichtungselement (36, 236) der Dichtungsvorrichtung abzugeben, um die Dichtungsvorrichtung in Verwendung mit Energie zu versorgen;
eine Fluidbarriere (117, 217), die zwischen dem Einlass und dem Auslass angeordnet ist und betriebsfähig ist, um den Einlass von dem Auslass zu isolieren, wobei eine Fluidkammer (20, 120, 220) zwischen der Fluidbarriere und dem Auslass definiert ist;
Mittel zum Erfassen einer Zustandsänderung in der Fluidkammer, die eine Volumenänderung des Dichtungselements der Dichtungsvorrichtung anzeigt;
**dadurch gekennzeichnet, dass** die Fluidkammer (20, 120, 220) eine Kolbenkammer (119) umfasst und dass die Fluidbarriere (117, 217) ein Kolbenelement (117, 217) ist, das eine Dichtung mit einer Innenwand der Kolbenkammer ausbildet und das in der Kolbenkammer als Reaktion auf eine Zustandsänderung in der Fluidkammer bewegbar ist; und
dass die Einrichtung mit mindestens einem Bypass (22) zu der Fluidbarriere (117, 217) versehen ist, der betriebsfähig ist, um die Dichtungsaktivierungsdruckquelle mit der Fluidkammer (20, 120, 220) über den Einlass (12, 112, 212) fluidisch zu verbinden.

2. Einrichtung (11, 110, 210) nach Anspruch 1, wobei die erfasste Zustandsänderung in der Fluidkammer (20, 120, 220) eine Volumenänderung der Fluidkammer als Reaktion auf eine Volumenänderung des Dichtungselements (36, 236) ist, und wobei die Volumenänderung der Fluidkammer gemessen wird und eine Volumenänderung des Dichtungselements aus der gemessenen Volumenänderung der Fluidkammer bestimmt wird.

3. Einrichtung (11, 110, 210) nach Anspruch 1, umfassend einen linearen Wandler (130, 230), der betriebsfähig ist, um die Position des Kolbenelements (117, 217) in der Kolbenkammer (119) zu messen.

4. Einrichtung (11, 110, 210) nach einem der vorstehenden Ansprüche, wobei die Einrichtung konfiguriert ist, um die Fluidkammer (119) aus der Dichtungsaktivierungsfluiddruckquelle wieder aufzuladen, wenn die Fluidkammer einen entleerten Zustand erreicht.

5. Einrichtung (11, 110, 210) nach einem der vorstehenden Ansprüche, ferner umfassend einen Einlassdruckwandler, der sich zwischen dem Einlass (12, 112, 212) und der Fluidkammer (119) befindet, um den Druck des Druckfluids zu überwachen, das über den Einlass in die Einrichtung gelangt, und einen Auslassdruckwandler, der sich zwischen der Fluidkammer und dem Auslass (14, 114, 214) befindet, um den Druck des Druckfluids zu messen, das an das Dichtungselement (36, 236) abgegeben wird.

6. Einrichtung (11, 110, 210) nach einem der vorstehenden Ansprüche, ferner umfassend einen Druckregler, der sich zwischen der Fluidkammer und dem Auslass (14, 114, 214) befindet, der betriebsfähig ist, um den Druck des Druckfluids an dem Auslass der Einrichtung zu regeln und somit den Druck des Druckfluids zu regeln, das an das Dichtungselement (36, 236) über den Auslass abgegeben wird.

7. Verfahren zum Überwachen einer Dichtungsvorrichtung (32, 232), das Verfahren umfassend:
Bereitstellen einer Einrichtung (11, 110, 210) nach einem der vorstehenden Ansprüche, wobei der Einlass (12, 112, 212) mit einer Dichtungsaktivierungsdruckfluidquelle verbunden ist und der Auslass (14, 114, 214) mit der Dichtungsvorrichtung (32, 232) verbunden ist;
Abgeben von Druckfluid an ein Dichtungselement der Dichtungsvorrichtung, um die Dichtungsvorrichtung mit Energie zu versorgen;
Isolieren der Dichtungsvorrichtung von der Dichtungsaktivierungsdruckfluidquelle durch eine Fluidbarriere (17, 117, 217), die zwischen dem Einlass und dem Auslass der Einrichtung angeordnet ist;
Erfassen einer Zustandsänderung in einer Fluidkammer (119) zwischen der Fluidbarriere und dem Auslass, wobei die Zustandsänderung eine Volumenänderung des Dichtungselements (36, 236) der Dichtungsvorrichtung anzeigt.

8. Verfahren nach Anspruch 7, umfassend ein Aussetzen der Fluidkammer (119) einem Druckfluid aus der Dichtungsaktivierungsdruckfluidquelle, um die Einrichtung in einen geladenen Zustand zu versetzen, und das Isolieren der Dichtungsvorrichtung (32, 232) von der Dichtungsaktivierungsdruckfluidquelle, nachdem die Fluidkammer geladen wurde.

9. Verfahren nach Anspruch 7 oder 8, umfassend das Wiederaufladen der Fluidkammer (119) durch das Aussetzen der Fluidkammer einem Druckfluid aus der Dichtungsaktivierungsdruckfluidquelle, um die Einrichtung in einen wiederaufgeladenen Zustand zu versetzen.

10. Verfahren nach Anspruch 9, umfassend das Isolieren der Dichtungsvorrichtung (32, 232) von der Dichtungsaktivierungsdruckfluidquelle nach dem Wiederaufladen der Fluidkammer (119) und das Wiederholen der Schritte des Erfassens einer Zustandsänderung in der Fluidkammer, bis die Fluidkammer einen entleerten Zustand erreicht, und des Wiederaufladens der Fluidkammer.

11. Verfahren zum Bestimmen einer Betriebslebensdauer einer Dichtungsvorrichtung (32, 232), das Verfahren umfassend:
Überwachen einer Dichtungsvorrichtung gemäß dem Verfahren nach Anspruch 7;
Messen eines oder mehrerer Referenzparameter während dem Überwachen der Dichtungsvorrichtung;
Berechnen einer Volumenänderungsrate des Dichtungselements (36, 236) in Bezug auf einen oder mehrere Referenzparameter, ausgewählt aus der Gruppe, umfassend: Zeit, Druck, Hub, relative Bewegung zwischen dem Dichtungselement der Dichtungsvorrichtung (32, 232) und einer Oberfläche, auf der das Dichtungselement eine Abdichtung bildet, und Temperatur;
Berechnen, aus der Änderungsrate, eines Werts des einen oder der mehreren Referenzparameter, bei dem ein unteres Schwellenvolumen des Dichtungselements passiert wird.

12. Verfahren zum Analysieren von Dichtungsverschleißeigenschaften, das Verfahren umfassend:
(a) Überwachen einer Dichtungsvorrichtung (32, 232) gemäß dem Verfahren nach Anspruch 7;
(b) Messen erster und zweiter Referenzparameter während dem Überwachen der Dichtungsvorrichtung;
(c) Berechnen einer Volumenänderungsrate des Dichtungselements in Bezug auf den ersten Referenzparameter;
(d) Berechnen eines Durchschnittswerts des zweiten Referenzparameters; und
(e) Verknüpfen der berechneten Volumenänderungsrate mit der Berechnung des Durchschnittswerts des zweiten Referenzparameters und Aufzeichnen der Verknüpfung in einer Datenbank.

13. Verfahren nach Anspruch 12, umfassend das Wiederholen der Schritte (a) bis (e) für eine oder mehrere weitere Dichtungsvorrichtungen (32, 232), das Bestimmen einer Korrelation zwischen einer Volumenänderungsrate des Dichtungselements und dem zweiten Referenzparameter und das Berechnen, aus der Korrelation für einen gegebenen Wert des zweiten Referenzparameters, eines Werts des ersten Referenzparameters, bei dem ein unteres Schwellenvolumen des Dichtungselements passiert wird.

## Revendications

1. Appareil (11, 110, 210) permettant de surveiller un état d'un dispositif d'étanchéité (32, 232), l'appareil comprenant :
une entrée (12, 112, 212) conçue pour recevoir un fluide sous pression d'une source de pression de fluide d'activation de joint ;
une sortie (14, 114, 214) conçue pour être raccordée à un dispositif d'étanchéité afin de délivrer un fluide sous pression à un élément de joint (36, 236) du dispositif d'étanchéité pour alimenter en énergie le dispositif d'étanchéité en cours d'utilisation ;
une barrière de fluide (117, 217) disposée entre l'entrée et la sortie et utilisable pour isoler l'entrée de la sortie, dans lequel une chambre de fluide (20, 120, 220) est définie entre la barrière de fluide et la sortie ;
des moyens de détection d'un changement d'état dans la chambre de fluide indiquant un changement de volume de l'élément de joint du dispositif d'étanchéité ;
**caractérisé en ce que** la chambre de fluide (20, 120, 220) comprend une chambre de piston (119), et **en ce que** la barrière de fluide (117, 217) est un élément de piston (117, 217) qui forme un joint avec une paroi interne de la chambre de piston et qui est mobile dans la chambre de piston en réponse à un changement d'état dans la chambre de fluide ; et
**en ce que** l'appareil est pourvu d'au moins une dérivation (22) de la barrière de fluide (117, 217), qui est utilisable pour raccorder de manière fluidique la source de pression d'activation de joint à la chambre de fluide (20, 120, 220) par l'intermédiaire de l'entrée (12, 112, 212).

2. Appareil (11, 110, 210) selon la revendication 1, dans lequel le changement d'état détecté dans la chambre de fluide (20, 120, 220) est un changement de volume de la chambre de fluide en réponse à un changement de volume de l'élément de joint (36, 236), et dans lequel le changement de volume de la chambre de fluide est mesuré, et un changement de volume de l'élément de joint est déterminé à partir du changement de volume mesuré de la chambre de fluide.

3. Appareil (11, 110, 210) selon la revendication 1, comprenant un transducteur linéaire (130, 230) qui est utilisable pour mesurer la position de l'élément de piston (117, 217) dans la chambre de piston (119).

4. Appareil (11, 110, 210) selon l'une quelconque revendication précédente, dans lequel l'appareil est conçu pour recharger la chambre de fluide (119) à partir de la source de pression de fluide d'activation de joint, lorsque la chambre de fluide atteint un état épuisé.

5. Appareil (11, 110, 210) selon l'une quelconque revendication précédente, comprenant en outre un transducteur de pression d'entrée situé entre l'entrée (12, 112, 212) et la chambre de fluide (119) pour surveiller la pression du fluide sous pression qui entre dans l'appareil par l'intermédiaire de l'entrée et un transducteur de pression de sortie situé entre la chambre de fluide et la sortie (14, 114, 214) pour mesurer la pression du fluide sous pression délivré à l'élément de joint (36, 236).

6. Appareil (11, 110, 210) selon l'une quelconque revendication précédente, comprenant en outre un régulateur de pression situé entre la chambre de fluide et la sortie (14, 114, 214), qui est utilisable pour réguler la pression du fluide sous pression au niveau de la sortie de l'appareil, et donc pour réguler la pression du fluide sous pression délivré à l'élément de joint (36, 236) par l'intermédiaire de la sortie.

7. Procédé de surveillance d'un dispositif d'étanchéité (32, 232), le procédé comprenant :
la fourniture d'un appareil (11, 110, 210) selon l'une des revendications précédentes, dans lequel l'entrée (12, 112, 212) est raccordée à une source de fluide sous pression d'activation de joint, et la sortie (14, 114, 214) est raccordée au dispositif d'étanchéité (32, 232) ;
la délivrance d'un fluide sous pression à un élément de joint du dispositif d'étanchéité pour alimenter en énergie le dispositif d'étanchéité ;
l'isolation du dispositif d'étanchéité de la source de fluide sous pression d'activation de joint par une barrière de fluide (17, 117, 217) disposée entre l'entrée et la sortie de l'appareil ;
la détection d'un changement d'état dans une chambre de fluide (119) entre la barrière de fluide et la sortie, le changement d'état indiquant un changement de volume de l'élément de joint (36, 236) du dispositif d'étanchéité.

8. Procédé selon la revendication 7, comprenant l'exposition de la chambre de fluide (119) à un fluide sous pression de la source de fluide sous pression d'activation de joint pour mettre l'appareil dans un état chargé, et l'isolation du dispositif d'étanchéité (32, 232) de la source de fluide sous pression d'activation de joint après que la chambre de fluide a été chargée.

9. Procédé selon la revendication 7 ou la revendication 8, comprenant la recharge de la chambre de fluide (119) par exposition de la chambre de fluide à un fluide sous pression de la source de fluide sous pression d'activation de joint pour mettre l'appareil dans un état rechargé.

10. Procédé selon la revendication 9, comprenant l'isolation du dispositif d'étanchéité (32, 232) de la source de fluide sous pression d'activation de joint après que la chambre de fluide (119) est rechargée et la répétition des étapes consistant à détecter un changement d'état dans la chambre de fluide jusqu'à ce que la chambre de fluide atteigne un état épuisé et à recharger la chambre de fluide.

11. Procédé de détermination d'une durée de vie opérationnelle d'un dispositif d'étanchéité (32, 232), le procédé comprenant :
la surveillance d'un dispositif d'étanchéité selon le procédé de la revendication 7 ;
la mesure d'un ou plusieurs paramètres de référence tout en surveillant le dispositif d'étanchéité ;
le calcul d'un taux de changement de volume de l'élément de joint (36, 236) par rapport aux un ou plusieurs paramètres de référence choisis dans le groupe comprenant : le temps, la pression, le pilonnement, la course relative entre l'élément de joint du dispositif d'étanchéité (32, 232) et une surface sur laquelle l'élément de joint crée un joint, et la température ;
le calcul à partir du taux de changement d'une valeur des un ou plusieurs paramètres de référence au niveau de laquelle un volume seuil inférieur d'élément de joint est dépassé.

12. Procédé d'analyse de caractéristiques d'usure de joint, le procédé comprenant :
(a) la surveillance d'un dispositif d'étanchéité (32, 232) selon le procédé de la revendication 7 ;
(b) la mesure de premier et second paramètres de référence tout en surveillant le dispositif d'étanchéité ;
(c) le calcul d'un taux de changement de volume de l'élément de joint par rapport au premier paramètre de référence ;
(d) le calcul d'une valeur moyenne du second paramètre de référence ; et
(e) l'association du taux calculé de changement de volume au calcul de la valeur moyenne du second paramètre de référence et l'enregistrement de l'association dans une base de données.

13. Procédé selon la revendication 12, comprenant la répétition des étapes (a) à (e) pour un ou plusieurs autres dispositifs d'étanchéité (32, 232), la détermination d'une corrélation entre un taux de changement de volume de l'élément de joint et le second paramètre de référence et le calcul à partir de la corrélation, pour une valeur donnée du second paramètre de référence, d'une valeur du premier paramètre de référence au niveau de laquelle un volume seuil inférieur de l'élément de joint est dépassé.
